# EUROPÄISCHE PATENTSCHRIFT

(11) **EP 3 078 825 B1**
(45) Veröffentlichungstag und Bekanntmachung des Hinweises auf die Patenterteilung: **13.09.2017**
(21) Anmeldenummer: 16150490.7
(22) Anmeldetag: 07.01.2016
(51) Int. Cl.: F01N 13/10, F01N 13/08, F02B 27/06, F02B 37/00, F02D 23/00

(54) **ABGASEINRICHTUNG ZUR TRENNUNG VON ABGASFLUTEN EINES VERBRENNUNGSMOTORS MIT MINDESTENS ZWEI ZYLINDERGRUPPEN**
EXHAUST GAS DEVICE FOR SEPARATION OF EXHAUST STROKES OF COMBUSTION ENGINE WITH AT LEAST TWO CYLINDER GROUPS
DISPOSITIF DE GAZ D'ECHAPPEMENT DESTINE A SEPARER DES FLUX DE GAZ D'ECHAPPEMENT D'UN MOTEUR A COMBUSTION INTERNE COMPRENANT AU MOINS DEUX GROUPES DE CYLINDRES

(30) Priorität: 01.04.2015 DE 102015205848
(43) Veröffentlichungstag der Anmeldung: 12.10.2016
(73) Patentinhaber: Volkswagen Aktiengesellschaft, 38440 Wolfsburg (DE)
(72) Erfinder: Prouvier, Matthieu, 38126 Braunschweig (DE); Kawelke, Peter, Isenbüttel 38550 (DE)

(56) Entgegenhaltungen:
- EP-A1- 1 960 641
- US-A1- 2009 241 526
- US-A1- 2010 206 265
- US-A1- 2012 085 091

## Beschreibung

Die Erfindung betrifft eine Abgaseinrichtung zur Trennung von Abgasfluten eines Verbrennungsmotors mit mindestens zwei Zylindergruppen, mit den Merkmalen des Oberbegriffes des Patentanspruches 1.

Ferner betrifft die Erfindung ein Verfahren mit den Merkmalen des Oberbegriffes des Patentanspruches 11.

Aus der gattungsbildenden DE 102 36 732 A1 ist eine mehrflutige Abgaseinrichtung zur Trennung von Abgasfluten eines Verbrennungsmotors bekannt. Der Verbrennungsmotor weist mindestens zwei Zylindergruppen auf, wobei jeder Zylindergruppe eine Abgasflut zugeordnet ist. Die Abgasfluten münden in eine Schalteinrichtung in Form einer Blendenanordnung, wobei mittels der Blendenanordnung die Abgasfluten wechselweise mit unterschiedlichen, ausgangsseitigen Abgassträngen verbindbar sind. Die ausgangsseitigen Abgasstränge sind jeweils einer der Abgasfluten zugeordnet. Die Abgasfluten beziehungsweise Abgasstränge sind durch jeweils kreissektorförmige Rohre gebildet, die gemeinsam einen kreisförmigen Querschnitt überdecken. Die Blendenanordnung weist eine drehbare Blendenscheibe mit kreissektorförmigen Bereichen zum Abdecken beziehungsweise Freigeben der Rohre auf. Die Blendenanordnung ist mittels eines Drehantriebes mechanisch mittels einer Zahnstange, einer Schnecke oder eines Zahnrades antreibbar. Die ausgangsseitigen Abgasstränge weisen jeweils Übersprechstellen mit unterschiedlichem Abstand in Strömungsrichtung zur Blendenanordnung auf. Hierdurch ist ein Umschalten des Abgasstromes zwischen den ausgangsseitigen Abgassträngen mit unterschiedlichen Übersprechstellen schaltbar und demgemäß soll eine Optimierung im Hinblick auf die unterschiedlichen Betriebspunkte der Brennkraftmaschine erfolgen. Gemäß eines weiteren Ausführungsbeispiels weisen die ausgangsseitigen Abgasstränge jeweils einen Katalysator auf. Durch ein Umschalten mittels der Blendenanordnung können die Katalysatoren wechselnd beaufschlagt werden. Die Katalysatoren sind in Strömungsrichtung unterschiedlich weit von der Blendenanordnung beabstandet, so dass durch ein Umschalten ein brennkraftmaschinennaher- und/oder ein brennkraftmaschinenferner Katalysator beaufschlagt werden kann.

Aus der DE 44 26 028 C1 ist eine Abgaseinrichtung in Form einer Abgasklappenanordnung bekannt. Die Abgasklappenanordnung ist in einer zweiflutigen Abgasstranganordnung mit einem ersten Abgasstrang und mit einem zweiten Abgasstrang einer Brennkraftmaschine angeordnet. Die Abgasklappenanordnung weist nun Abgasklappen auf, wobei die eine Abgasklappe im ersten Abgasstrang und die andere Abgasklappe im zweiten Abgasstrang angeordnet ist. Die beiden Abgasklappen sind durch einen Mitnehmer miteinander verbunden. Die beiden Abgasklappen sind um 90° Grad gegeneinander verdreht angeordnet.
Das Dokument US 2012/085091 A1 zeigt eine Brennkraftmaschine mit mindestens vier Zylindern und einem Abgaskrümmer. Dier Abgaskrümmer ist mit einer Turbine verbunden. Zwischen dem Abgaskrümmer und der Turbine ist ein Verteilungs-Ventil angeordnet. Das Verteilungs-Ventil hat einen einzigen Auslass der mit der Turbine verbunden ist. Das Verteilung-Ventil besteht aus einem fixierten zylindrischen Kammer, die axial in Richtung der Turbine geöffnet ist. Dabei sind in dem Zylindermantel zwei bis vier identische Öffnungen in rechteckiger Form ausgebildet. Mit diesen Öffnungen können die Auslässe der einzelnen Zylinder mindestens für die Dauer des "Puffs" voneinander abgetrennt werden.

Die EP 1 960 641 A1 beschreibt eine Vorrichtung zur Kontrolle von Abgas. Die Vorrichtung umfasst die Anordnung von mehreren Vorrichtungen zum Abdichten der Auslasskanäle eines Abgaskrümmers. Die Auslasskanäle sollen dabei in einer Abhängigkeit vom Betrieb der Brennkraftmaschine gesteuert werden. Dabei soll die thermische und kinetische Energie des Abgases mit den Vorrichtungen zum Abdichten durch eine Volumenänderung des Abgaskrümmers verteilt werden

Die US 2009/173060 A1 beschreibt einen Abgaskrümmer, der in einen Zylinderkopf integriert ist. Der Abgaskrümmer bildet dabei einen Auslass 3 Abgasfluten aus den vier Zylindern.

Die gattungsbildende Abgaseinrichtung ist noch nicht optimal ausgebildet. Das Übersprechen zwischen den Abgasfluten der unterschiedlichen Zylindergruppen kann zu einem erhöhten Restgasgehalt und damit zu einer erhöhten Klopfneigung insbesondere im Volllastbetrieb führen. Hierdurch kann die Leistungsfähigkeit des Verbrennungsmotors begrenzt sein.

Der Erfindung liegt daher die Aufgabe zugrunde, ein Übersprechen zwischen den Abgasfluten der unterschiedlichen Zylindergruppen zu verhindern.

Diese der Erfindung zugrunde liegende Aufgabe wird nun durch eine Abgaseinrichtung mit den Merkmalen des Patentanspruches 1 oder 8 gelöst. Die Erfindung wird ferner durch ein Verfahren mit den Merkmalen des Patentanspruches 14 gelöst.

Mittels der Blendenanordnung sind die Abgasfluten wechselweise mit dem ausgangsseitigen Abgasstrang verbindbar. In einer Zündfolge benachbarte Zylinder sind unterschiedlichen Zylindergruppen und damit unterschiedlichen Abgasfluten zugeordnet. Die Blendenanordnung wird dabei in Abhängigkeit von Auslassventilsteuerzeiten der Zylindergruppen betrieben. Die aktuell abgasausschiebende Zylindergruppe ist dabei jeweils über die Blendenanordnung mit dem ausgangsseitigen Abgasstrom verbunden. Die nicht abgasausschiebende Zylindergruppe oder gegebenenfalls die weiteren, nicht abgasausschiebenden Zylindergruppen sind mittels der Blendenanordnung von dem ausgangsseitigen Abgasstrang getrennt. Die Blendenanordnung weist eine rotierende Blendenscheibe auf. Die Blendenscheibe weist mehrere Schlitze zur Verbindung der Abgasfluten mit dem mindestens einen Abgasstrang auf. Diese Blendenscheibe weist vorzugsweise sich über jeweils einen Teilumfang erstreckende kreisringsegmentförmige Schlitze auf, welche jeweils einer der Abgasfluten zugeordnet sind. In bevorzugter Ausgestaltung sind die Schlitze auf unterschiedlichen Radien der rotierenden Scheibe angeordnet. Dies ermöglicht eine große Gestaltungsfreiheit und damit große Freiheitsgrade bei der Gestaltung der Öffnungsdauer. Es ist denkbar, dass die Blendenscheibe mit einer Kurbelwellendrehzahl oder einer zur Kurbelwellendrehzahl proportionalen Drehzahl, beispielsweise der Nockenwellendrehzahl rotiert und entsprechend angetrieben ist. Wenn die Blendenscheibe mit der Kurbelwellendrehzahl rotiert, erstrecken sich die Schlitze insbesondere über einen Winkel von 180° Grad. Wenn die Scheibe mit der halben Drehzahl nämlich der Nockenwellendrehzahl rotiert, erstrecken sich die Schlitze vorzugsweise über einen Winkel von 90° Grad. Benachbarte Schlitze sind um 90° Grad beziehungsweise 180° Grad zueinander versetzt und auf unterschiedlichen Radien angeordnet.
Die Blendenanordnung wird entsprechend gesteuert und/oder geregelt. Die Blendenanordnung gibt die Abgasfluten der Zylindergruppen wechselweise zu bestimmten Zeitpunkten frei oder versperrt diese, um ein Übersprechen zu verhindern. Es ist vorzugsweise jeweils nur eine der Abgasfluten mit einem der Abgasstränge verbunden, was den Vorteil hat, dass alle anderen Abgasfluten vor einem Übersprechen geschützt sind.

In bevorzugter Ausgestaltung weist der Verbrennungsmotor zwei Zylindergruppen auf. Der Verbrennungsmotor kann insbesondere als 4-Zylinder-Motor ausgebildet sein. Der Verbrennungsmotor kann einen Zylinderkopf mit einem integrierten Abgaskrümmer aufweisen, wobei der Abgaskrümmer die Abgasfluten bildet. Die Blendenanordnung ist stromabwärts des Abgaskrümmers angeordnet. In anderen Ausgestaltungen weist der Verbrennungsmotor mehr als zwei Zylindergruppen auf. Die der jeweiligen Zylindergruppe zugeordneten Zylinder weisen unterschiedliche Auslassventilsteuerzeiten auf.

Die Öffnungszeitpunkte der Blendenanordnung richten sich nach den Auslassventilsteuerzeiten der Zylinder. Die wechselnde Verbindung der Abgasfluten mit dem mindestens einen Abgasstrang erfolgt insbesondere in Abhängigkeit des Kurbelwellenwinkels. Die wechselnde Verbindung der Abgasfluten mit den Abgasstrang erfolgt insbesondere einen bestimmten Kurbelwellenwinkel nach dem Öffnen des Auslassventils des abgasausschiebenden Zylinders der zugehörigen Zylindergruppe. Die Blendenanordnung öffnet dabei die Verbindung zu dem Abgasstrang vorzugsweise um einen bestimmten Kurbelwellenwinkel versetzt nachdem das Auslassventil des abgasausschiebenden Zylinders geöffnet worden ist. Dieser bestimmte Kurbelwellenwinkel kann auch als Offset bezeichnet werden und hängt insbesondere von der Dauer ab, die der Auslassimpuls von dem Auslassventil bis zu Blendenanordnung benötigt.

Bei einem 4-Zylinder-Motor mit 180 Grad des Kurbelwellenwinkel (°KW) Zündabstand beträgt die Öffnungsdauer jeweils 180 °KW. Ein 4-Zylinder-Motor weist beispielsweise einen ersten, zweiten, dritten und vierten Zylinder auf. Die Zündfolge kann 1-3-4-2 betragen. In der Zündfolge benachbarte Zylinder sind unterschiedlichen Zylindergruppen zugeordnet. Der erste und der vierte Zylinder bilden eine erste Zylindergruppe und der zweite und dritte Zylinder bilden eine zweite Zylindergruppe. Der ersten Zylindergruppe mit dem ersten und dem vierten Zylinder ist dabei eine erste Abgasflut zugeordnet. Der zweite und dritte Zylinder bilden eine zweite Zylindergruppe ist. Der zweiten Zylindergruppe ist eine zweite Abgasflut zugeordnet. Diese getrennten Abgasfluten bilden nun jeweils den Eingang der Blendenanordnung. Hinter der Blendenanordnung werden die Abgasfluten zunächst in jeweils einen separaten Abgasstrang und danach in einen gemeinsamen Abgasstrang zusammengeführt.

Wenn nun der erste Zylinder ausschiebt, ist die erste Abgasflut durch die Blendenanordnung geöffnet und somit mit dem entsprechenden ausgangsseitigen Abgasstrang verbunden. Die zweite Abgasflut ist durch die Blendenanordnung versperrt und somit ist die zweite Abgasflut von dem ausgangsseitigen Abgasstrang getrennt. Das Abgas des ersten Zylinders strömt von dem ausgangsseitigen Abgasstrang getrennt. Das Abgas des ersten Zylinders strömt nun durch die erste Abgasflut und durch die Blendenanordnung in den Abgasstrang. Dadurch, dass die Blendenanordnung die zweite Abgasflut gleichzeitig sperrt, ist verhindert, dass das Abgas des ausschiebenden, ersten Zylinders in die zweite Abgasflut gelangen kann. Hierdurch ist ein Übersprechen zwischen der ersten Zylindergruppe und der zweiten Zylindergruppe verhindert. Entsprechend der Zündfolge (1-3-4-2) wird darauffolgend der dritte Zylinder mit dem Ausschiebevorgang beginnen. Die zweite Abgasflut wird geöffnet und die erste Abgasflut wird durch die Blendenanordnung verschlossen. Bevor der Abgasimpuls das noch geöffnete Auslassventil des ersten Zylinders erreicht, wird die erste Abgasflut des ersten und vierten Zylinders durch die Blendenanordnung verschlossen. Es kann so verhindert werden, dass das Abgas eines abgasausschiebenden Zylinders in den danach abgasausschiebenden Zylinder zurückgedrückt wird. Der Restgasgehalt und damit eine Klopfneigung werden verringert. Die Leistungsfähigkeit des Verbrennungsmotors kann gesteigert werden. Auch bei einem entsprechend langen Auslassimpuls kann das Übersprechen verhindert werden. Damit kann die Leistungsfähigkeit des Verbrennungsmotors deutlich gesteigert werden. Vorzugsweise ist ferner die Leistungsfähigkeit des Verbrennungsmotors durch einen Abgasturbolader gesteigert. Eine Turbine des Abgasturboladers ist stromabwärts der Blendenanordnung angeordnet.

Eine alternative erfindungsgemäße Ausgestaltung der Blendenanordnung weist ein translatorisch bewegbares Verschlussmittel auf, das eine translatorische Bewegung zur Verschließung und Freigabe der Abgasfluten ermöglicht. Als Verschlussmittel können beispielsweise zwei Bleche Verschlussmittels ist beispielsweise durch einen Nocken gesteuert. Das Verschlussmittel wirkt mit dem Nocken zusammen. Ferner ist es denkbar, dass in weiterer alternativer Ausgestaltung das Verschlussmittel translatorisch oder rotatorisch durch einen Servoantrieb bewegt wird.

Es gibt nun eine Vielzahl von Möglichkeiten, die erfindungsgemäße Abgaseinrichtung und das entsprechende erfindungsgemäße Verfahren auszugestalten und weiterzubilden. Hierfür darf zunächst auf die dem Patentanspruch 1 und dem Patentanspruch 11 nachgeordneten Patentansprüche verwiesen werden. Im Folgenden werden mehrere Ausgestaltungen der Abgaseinrichtung anhand der Beschreibung und der dazugehörigen Zeichnung näher erläutert. In der Zeichnung zeigt:
- Fig. 1: in einer stark schematischen Darstellung eine zwischen einem Abgasturbolader und einem Verbrennungsmotor angeordnete Abgaseinrichtung,
- Fig. 2: in einer schematischen Darstellung die Anordnung der Abgaseinrichtung zwischen einem Zylinderkopf und einer Turbine des Abgasturboladers,
- Fig. 3: in einer schematischen Darstellung eine erste Ausgestaltung einer Blendenscheibe,
- Fig. 4: in einer schematischen Darstellung eine zweite Ausgestaltung einer Blendenscheibe,
- Fig. 5: in einer schematischen Darstellung eine Blendenanordnung mit zwei Trennblechen,
- Fig. 6: in einer schematischen Darstellung zwei Blendendrosselfunktionen aufgetragen über einen Kurbelwellenwinkel,
- Fig. 7: in einem Diagramm eine Blendenverschlusssteuerzeit und zwei Ventilsteuerzeiten, die über eine Drehzahl des Verbrennungsmotors aufgetragen sind,
- Fig. 8: in einem schematischen Diagramm mehrere Massenströme, einen Hub eines Einlassventils, einen Hub eines Auslassventils, die über einen Kurbelwellenwinkel aufgetragen sind,
- Fig. 9: in einem Diagramm ein Drehmoment des Verbrennungsmotors, das über eine Drehzahl des Verbrennungsmotors aufgetragen ist, und
- Fig. 10: in einem Diagramm zwei im Zylinder verbleibende Restgasgehalte, die über eine Drehzahl des Verbrennungsmotors aufgetragen sind.

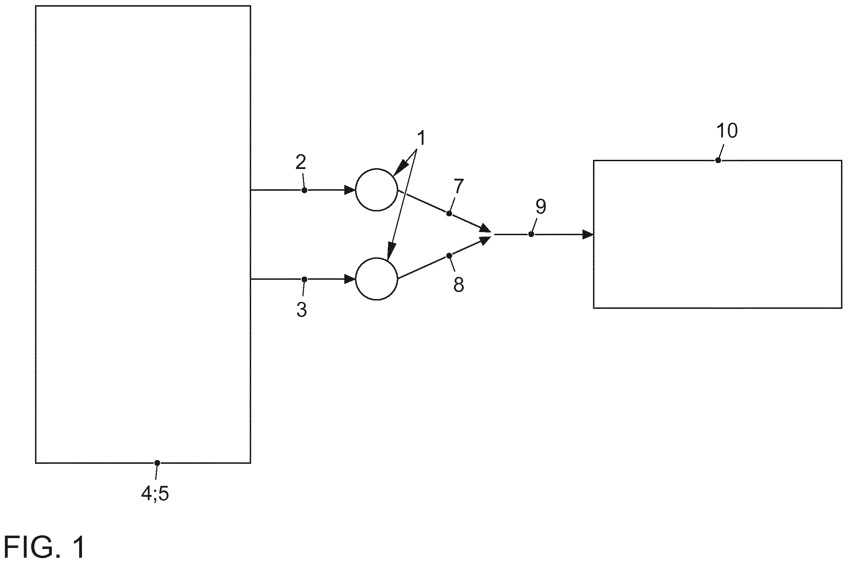

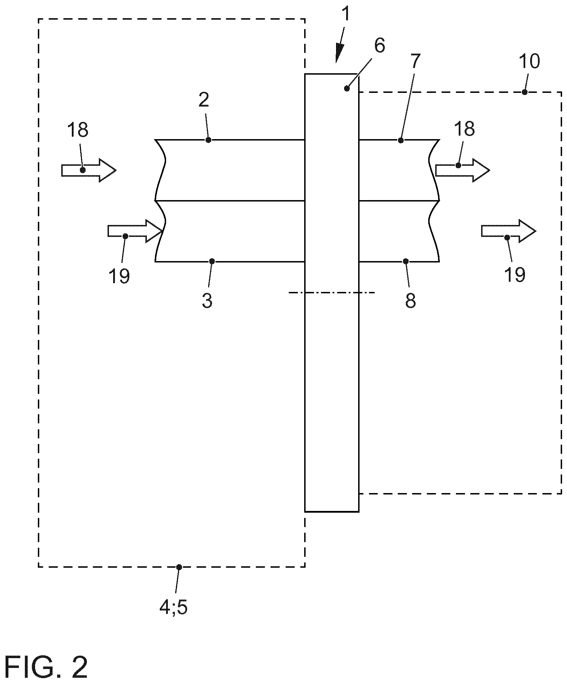

In Fig. 1 und 2 ist stark schematisch eine Abgaseinrichtung 1 zur Trennung von Abgasfluten 2, 3 eines Verbrennungsmotors 4 dargestellt. Der Verbrennungsmotor 4 weist einen Zylinderkopf 5 mit einem Abgaskrümmer (nicht im Einzelnen dargestellt) auf. Der Verbrennungsmotor 4 kann beispielsweise vier Zylinder aufweisen, nämlich einen ersten, einen zweiten, einen dritten und einen vierten Zylinder. Das Abgas des ersten und des vierten Zylinders werden dabei durch die Abgasflut 2 und das Abgas des zweiten und dritten Zylinders werden durch die Abgasflut 3 abgeleitet.

Der Verbrennungsmotor 4 weist somit zwei Zylindergruppen auf, nämlich eine erste Zylindergruppe mit dem ersten und dem vierten Zylinder und eine zweite Zylindergruppe mit dem zweiten und dritten Zylinder. In alternativer Ausgestaltung ist es denkbar, dass der Verbrennungsmotor 4 mehr als zwei Zylindergruppen, beispielsweise drei oder vier Zylindergruppen aufweist. Jede Zylindergruppe weist mindestens einen Zylinder auf. Die Zylindergruppen weisen vorzugsweise jeweils zwei Zylinder auf. Jeder Zylindergruppe ist eine Abgasflut 2, 3 zugeordnet. Die Abgasfluten 2, 3 bilden den Eingang einer Blendenanordnung 6. Mittels der Blendenanordnung 6 sind die Abgasfluten 2, 3 jeweils mit ausgangsseitigen Abgassträngen 7, 8 verbindbar. Die beiden ausgangsseitigen Abgasstränge 7, 8 münden in einen gemeinsamen Abgasstrang 9. Stromabwärts der Blendenanordnung 6 ist eine Turbine 10 eines Abgasturboladers angeordnet. Der Abgasstrang 9 wird der Turbine 10 zugeleitet.

Mittels der Blendenanordnung 6 sind die Abgasfluten 2, 3 jeweils wechselweise mit einem der ausgangsseitigen Abgasstränge 7, 8 und dabei auch mit dem Abgasstrang 9 verbindbar.

Die Abgasflut 2 und der Abgasstrang 7 sind fluchtend zueinander angeordnet. Die Abgasflut 3 und der Abgasstrang 8 sind ebenfalls fluchtend zueinander angeordnet.

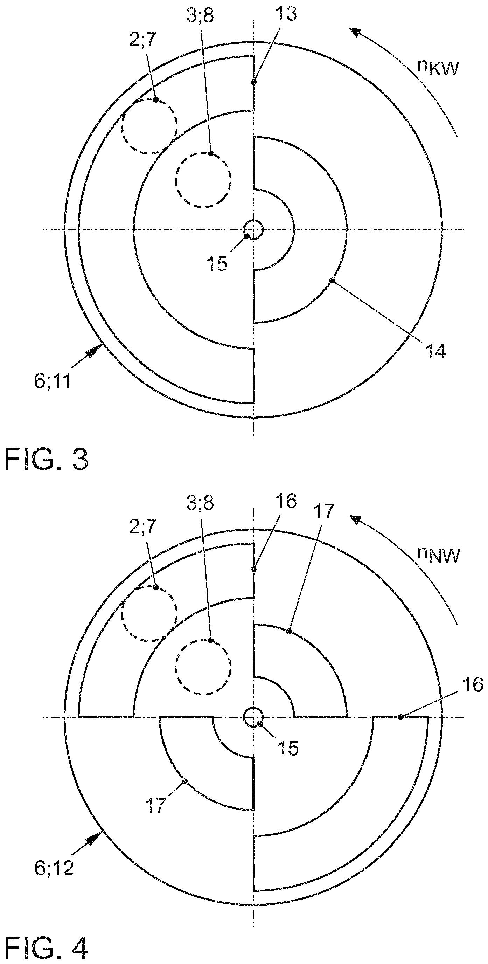

Es gibt nun verschiedene Möglichkeiten, die Blendenanordnung 6 auszugestalten. In den in Fig. 3 und 4 dargestellten Ausgestaltungen weist die Blendenanordnung 6 jeweils eine rotierende Blendenscheibe 11, 12 auf. Die Blendenscheibe 11 (vgl. Fig. 3) weist zwei Schlitze 13, 14 auf, die kreissegmentförmig jeweils im gleichen radialen Abstand zur Drehachse 15 wie die Abgasflut 2 beziehungsweise die Abgasflut 3 angeordnet sind. Wenn nun die Blendenscheibe 11 derart gedreht wird, so dass der Schlitz 13 die Abgasflut 2 überdeckt, so ist die Abgasflut 2 mit dem Abgasstrang 7 verbunden. Die Schlitze 13, 14 erstrecken sich jeweils über einen Drehwinkel von 180° Grad. Die Schlitze 13, 14 sind derart versetzt zueinander angeordnet, dass jeweils nur eine der Abgasfluten 2, 3 mit einem der Abgasstränge 7, 8 verbunden ist. Die Schlitze 13, 14 sind hier um 180° Grad versetzt zueinander angeordnet.

Die in Fig. 4 dargestellte Blendenscheibe 12 weist zwei Schlitze 16 und zwei Schlitze 17 auf. Die Schlitze 16 sind der Abgasflut 2 und dem Abgasstrang 7 zugeordnet und radial außen angeordnet. Die radial inneren Schlitze 17 sind in radialer Höhe der Abgasflut 3 beziehungsweise des Abgasstranges 8 angeordnet. Auch hier sind die Schlitze 16, 17 derart an der Blendenscheibe 12 ausgebildet, so dass jeweils nur eine der Abgasfluten 2, 3 mit dem entsprechenden Abgasstrang 7, 8 verbunden ist, und die anderen Abgasstränge 7, 8 von den Abgasfluten 2, 3 gesperrt sind. Die Schlitze 16, 17 erstrecken sich jeweils über 90 Grad des Winkelumfangs. Die Schlitze 16, 17 sind wechselweise um 90 Grad beabstandet zueinander angeordnet. Die beiden Schlitze 16 sind jeweils um 180 Grad beabstandet zueinander angeordnet, die beiden Schlitze 17 ebenfalls um 180 Grad zueinander beabstandet angeordnet.

Die eingangs genannten Nachteile sind nun dadurch vermieden, dass in einer Zündfolge benachbarte Zylinder unterschiedlichen Zylindergruppen zugeordnet sind. Die Blendenanordnung 6 ist in Abhängigkeit von Auslassventilsteuerzeiten der Zylinder betreibbar, wobei die abgasausschiebende Zylindergruppe über die Blendenanordnung 6 mit dem ausgangsseitigen Abgasstrom 7, 8 verbunden ist, wobei die nicht abgasausschiebende Zylindergruppe mittels der Blendenanordnung 6 von dem ausgangsseitigen Abgasstrang 7, 8 getrennt ist.

Die Blendenanordnung 6 kann in Abhängigkeit von Auslassventilsteuerzeiten der Zylindergruppen dadurch betrieben werden, dass die Blendenscheibe mit einer zur Kurbelwellen- oder zur Nockenwellendrehzahl proportionalen Drehzahl rotiert.

Die in Fig. 3 dargestellte Blendenscheibe 11 wird mit der Drehzahl der Kurbelwelle angetrieben. Die in Fig. 4 dargestellte Blendenscheibe 12 wird mit der Drehzahl der Nockenwelle angetrieben. Das Schließen der Abgasfluten 2, 3 erfolgt entsprechend der Zündfolge, so dass der in Fig. 2 angedeutete Auslassstoß 18 nicht über den Abgasstrang 8 zurück in die Abgasflut 3 gelangt. Ebenso wird der Auslassstoß 19 in der zweiten Zylindergruppe durch den Blendenanordnung 6 daran gehindert, zurück in die Abgasflut 2 zu gelangen.

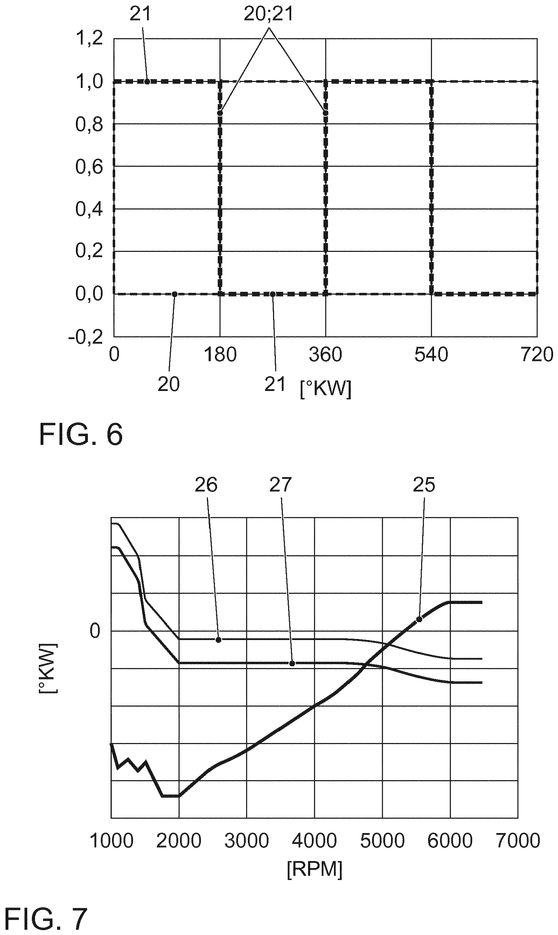

In Fig. 6 ist stark schematischer die Blendendrosselfunktion 20 und 21 dargestellt. Gut zu erkennen ist, dass die der Abgasflut 2 und dem Abgasstrang 7 zugeordnete Drosselfunktion jeweils über die ersten 180 Grad des Kurbelwellenwinkels (°KW) geschlossen ist, während in diesen ersten 180°KW die zweite Drosselfunktion 21 angibt, dass die Blendenanordnung 6 für die Abgasflut 3 geöffnet ist und somit der Auslassstoß 19 in den Abgasstrang 8, aber nicht zurück durch den Abgasstrang 7 in die Abgasflut 2 gelangen kann. In den nächsten 180 °KW fällt nun die Drosselfunktion 21 auf den Wert "0" und die Blendendrosselfunktion 20 entsprechend auf den Wert "1", so dass der Auslassstoß 18 durch die Abgasflut 2 in den Abgasstrang 7, aber nicht zurück durch den Abgasstrang 8 in die Abgasflut 3 gelangen kann. Die in Fig. 6 senkrecht dargestellten Flanken (nicht näher bezeichnet) sind nur schematisch angedeutet. Die Steigung der Flanken hängt von der Ausgestaltung der Schlitze 13, 14, 16, 17 und der Ausgestaltung der Abgasfluten 2, 3 im Bereich der Blendenanordnung 6 ab.

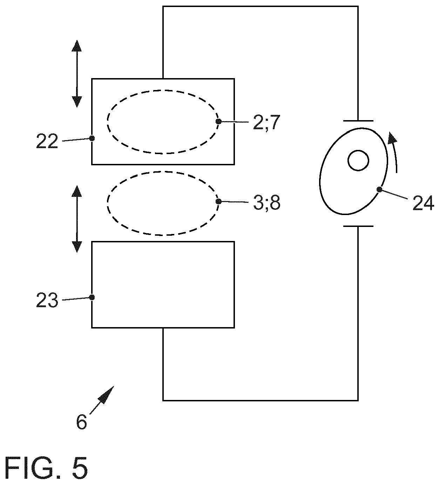

In der in Fig. 5 dargestellten Ausgestaltung ist skizziert, dass die Blendenanordnung 6 durch ein oder mehrere translatorisch bewegbare Verschlussmittel 22, 23 ausgebildet werden kann. Die Verschlussmittel 22, 23 werden translatorisch verschoben, so dass jeweils eines der Verschlussmittel 22, 23 eine der Abgasfluten 2, 3 verdeckt und so die entsprechende Abgasflut 2, 3 von dem entsprechenden Abgasstrang 7, 8 trennt. Die andere Abgasflut 3, 2 ist entsprechend mit dem Abgasstrang 8, 7 verbunden. Die Ansteuerung der Verschlussmittel 2, 3 kann mittels eines Nockens 24 erfolgen. Der Nocken 24 wird gedreht. Der Nocken 24 kann beispielsweise mit der Kurbelwellendrehzahl rotieren.

In Fig. 7 ist eine Ventilöffnungssteuerzeit 25 der Einlassventile (nicht dargestellt) über der Drehzahl des Verbrennungsmotors 4 aufgetragen. Ferner ist eine Ventilschließsteuerzeit 26 des Auslassventils dargestellt. Eine Blendenverschlusssteuerzeit 27 der Blendenanordnung 6 ist um einen vorzugsweise konstanten Kurbelwellenwinkel beziehungsweise Offset zu der Ventilschließsteuerzeit 26 des Auslassventils versetzt. Der Offset zwischen der Blendenverschlusssteuerzeit 27 und der Ventilschließsteuerzeit 26 entspricht dabei im Wesentlichen der Zeit, die die Auslassstöße 18, 19 auf dem Weg von dem Auslassventil bis zur Blendenanordnung 6 benötigen.

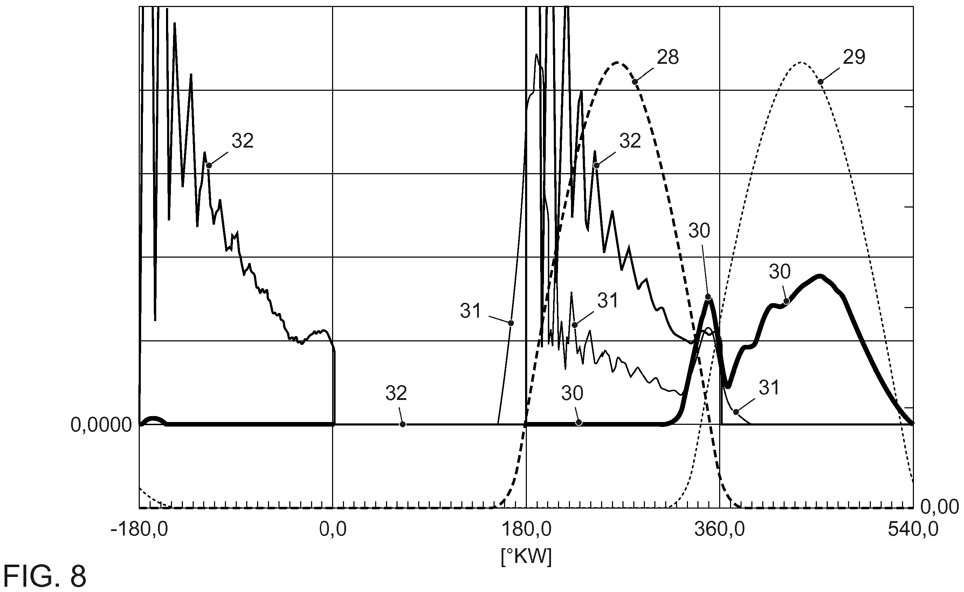

In Fig. 8 ist ein Hub 28 des Auslassventils und ein Hub 29 des Einlassventils über dem Kurbelwellenwinkel aufgetragen. Das Auslassventil 28 wird kurz vor 180 °KW geöffnet und kurz nach 360 °KW geschlossen. Gut zu erkennen ist, dass nach dem Öffnen des Einlassventils 29 der Massenstrom 30 zunächst ansteigt, danach wieder ein wenig abfällt und danach wieder ansteigt. Der Abfall ist dabei nicht so stark, dass die Flussrichtung des Massenstroms 30 umgekehrt werden würde. Dies wird dadurch erreicht, dass die Blendenanordnung 6 ein Eindringen des ausgestoßenen Abgases zum Ende des Hubs 28 des Auslassventils hin in die entsprechende Abgasflut 2, 3 hinein verhindert. Ferner ist in Fig. 8 der Massenstrom 31 des Auslassventils dargestellt. Der Massenstrom 32 der ersten Abgasflut 2 durch die Blendenanordnung 6 ist ebenfalls dargestellt. Gut zu erkennen ist, dass der Massenstrom 32 in den Bereichen 0 °KW bis 180 °KW sowie 360 °KW bis 540 °KW gleich null ist, da hier die Blendenanordnung 6 die Abgasflut 2 versperrt.

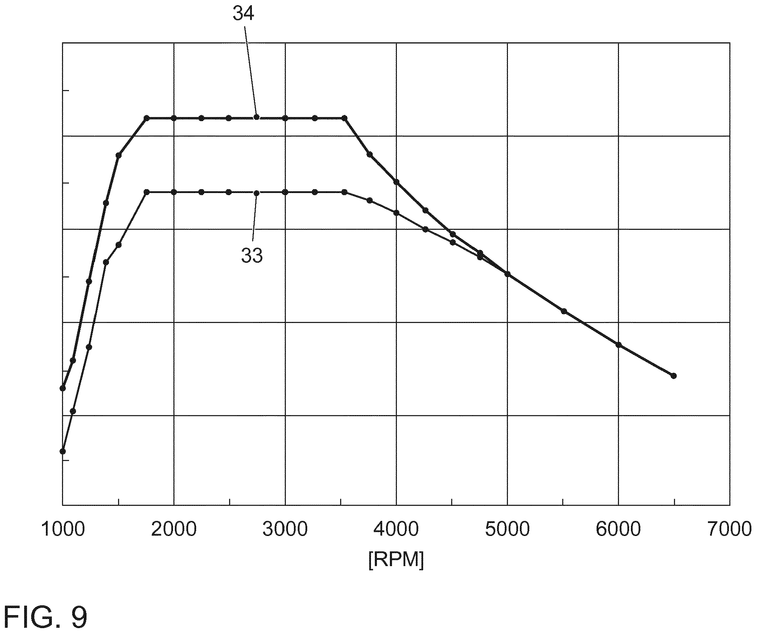

In Fig. 9 ist ein Drehmoment 33 eines Verbrennungsmotors 4 ohne eine erfindungsgemäße Abgaseinrichtung 1 und ein Drehmoment 34 eines Verbrennungsmotors 4 mit einer nachgeordneten erfindungsgemäßen Abgaseinrichtung 1 dargestellt. Gut zu erkennen ist, dass das Drehmoment des Verbrennungsmotors 4 mit der erfindungsgemäßen Abgaseinrichtung 1 insbesondere im Bereich bis 4.000 Umdrehungen pro Minute höher liegt als das Drehmoment 33.

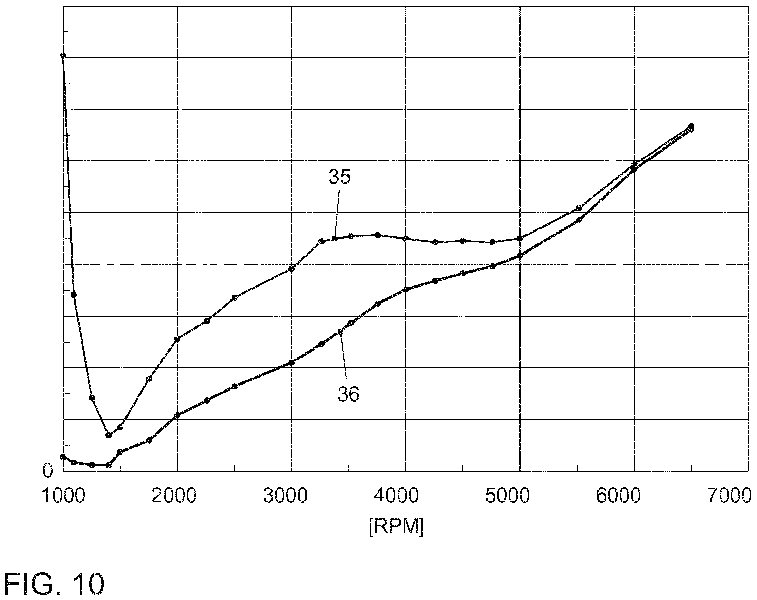

In Fig. 10 ist ein Restgasgehalt 35 und ein Restgasgehalt 36 in jeweils einem der Zylinder über der Drehzahl aufgetragen. Der Restgasgehalt 35 ist dabei für einen Verbrennungsmotor ohne eine erfindungsgemäße Abgaseinrichtung 1 und der Restgasgehalt 36 ist für ein Verbrennungsmotor mit einer nachgeordneten erfindungsgemäßen Abgaseinrichtung 1 dargestellt. Gut ersichtlich ist, dass der Restgasgehalt des Verbrennungsmotors mit der nachgeordneten Abgaseinrichtung 1 niedriger liegt als der Restgasgehalt 35. Durch die erfindungsgemäße Abgaseinrichtung 1 wird das Ausschieben der Abgasstöße 18, 19 erleichtert, der Abgasgegendruck sinkt. Hierdurch kann der Restgasgehalt gesenkt werden, was zu einer entsprechenden Drehmomentsteigerung führt.

Die eingangs genannten Nachteile sind daher vermieden und entsprechende Vorteile sind erzielt.

### BEZUGSZEICHENLISTE

- 1: Abgaseinrichtung
- 2: Abgasflut
- 3: Abgasflut
- 4: Verbrennungsmotor
- 5: Zylinderkopf
- 6: Blendenanordnung
- 7: Abgasstrang
- 8: Abgasstrang
- 9: Abgasstrang
- 10: Turbine
- 11: Blendenscheibe
- 12: Blendenscheibe
- 13: Schlitz
- 14: Schlitz
- 15: Drehachse
- 16: Schlitz
- 17: Schlitz
- 18: Auslassstoß
- 19: Auslassstoß
- 20: Blendendrosselfunktion
- 21: Blendendrosselfunktion
- 22: Verschlussmittel
- 23: Verschlussmittel
- 24: Nocken
- 25: Ventilöffnungssteuerzeit (Einlassventil)
- 26: Ventilschließsteuerzeit (Auslassventil)
- 27: Blendenverschlusssteuerzeit
- 28: Hub des Auslassventils
- 29: Hub des Einlassventils
- 30: Massenstrom des Einlassventils
- 31: Massenstrom des Auslassventils
- 32: Massenstrom der Blendenanordnung
- 33: Drehmoment
- 34: Drehmoment
- 35: Restgasgehalt
- 36: Restgasgehalt

## Patentansprüche

1. Abgaseinrichtung (1) zur Trennung von Abgasfluten (2, 3) eines Verbrennungsmotors (4) mit mindestens zwei Zylindergruppen, wobei jeder Zylindergruppe eine Abgasflut (2, 3) zugeordnet ist, wobei mittels einer Blendenanordnung (6) die Abgasfluten (2, 3) wechselweise mit mindestens einem ausgangsseitigen Abgasstrang (7, 8, 9) verbindbar sind, wobei in einer Zündfolge benachbarte Zylinder unterschiedlichen Zylindergruppen zugeordnet sind, wobei die Blendenanordnung (6) in Abhängigkeit von Auslassventilsteuerzeiten der Zylindergruppen betreibbar ist, wobei die abgasausschiebende Zylindergruppe über die Blendenanordnung (6) mit dem ausgangsseitigen Abgasstrom (7, 8) verbunden ist, wobei die nicht abgasausschiebende Zylindergruppe mittels der Blendenanordnung (6) von dem ausgangsseitigen Abgasstrang (7, 8) getrennt ist, wobei die Blendenanordnung (6) eine rotierende Blendenscheibe (11, 12) aufweist, **dadurch gekennzeichnet, dass** die Blendenscheibe (11, 12) mehrere Schlitze (13, 14; 16; 17) zur Verbindung der Abgasfluten (2, 3) mit dem mindestens einen Abgasstrang (7, 8, 9) aufweist.

2. Abgaseinrichtung nach Anspruch 1, **dadurch gekennzeichnet, dass** stromabwärts der Blendenanordnung (6) eine Turbine (10) eines Abgasturboladers angeordnet ist.

3. Abgaseinrichtung nach einem der vorstehenden Ansprüche, **dadurch gekennzeichnet, dass** die Blendenscheibe (11, 12) mit der Kurbelwellendrehzahl oder mit der Nockenwellendrehzahl antreibbar ist.

4. Abgaseinrichtung nach einem der vorstehenden Ansprüche, **dadurch gekennzeichnet, dass** wenn die Blendenscheibe mit Kurbelwellendrehzahl rotiert, sich die Schlitze über einen Winkel von 180° erstrecken.

5. Abgaseinrichtung nach einem der vorstehenden Ansprüche, **dadurch gekennzeichnet, dass** wenn die Blendenscheibe mit der Nockenwellendrehzahl rotiert, sich die Schlitze über einen Winkel von 90° erstrecken.

6. Abgaseinrichtung nach einem der vorstehenden Ansprüche, **dadurch gekennzeichnet, dass** jeweils nur eine der Abgasfluten (2, 3) mit einem der Abgasstränge (7, 8) verbunden ist.

7. Abgaseinrichtung (1) zur Trennung von Abgasfluten (2, 3) eines Verbrennungsmotors (4) mit mindestens zwei Zylindergruppen, wobei jeder Zylindergruppe eine Abgasflut (2, 3) zugeordnet ist, wobei mittels einer Blendenanordnung (6) die Abgasfluten (2, 3) wechselweise mit mindestens einem ausgangsseitigen Abgasstrang (7, 8, 9) verbindbar sind, wobei in einer Zündfolge benachbarte Zylinder unterschiedlichen Zylindergruppen zugeordnet sind, wobei die Blendenanordnung (6) in Abhängigkeit von Auslassventilsteuerzeiten der Zylindergruppen betreibbar ist, wobei die abgasausschiebende Zylindergruppe über die Blendenanordnung (6) mit dem ausgangsseitigen Abgasstrom (7, 8) verbunden ist, wobei die nicht abgasausschiebende Zylindergruppe mittels der Blendenanordnung (6) von dem ausgangsseitigen Abgasstrang (7, 8) getrennt ist, **dadurch gekennzeichnet, dass** die Blendenanordnung (6) ein translatorisch bewegbares Verschlussmittel (22, 23) aufweist.

8. Abgaseinrichtung nach Anspruch 7, **dadurch gekennzeichnet, dass** stromabwärts der Blendenanordnung (6) eine Turbine (10) eines Abgasturboladers angeordnet ist.

9. Abgaseinrichtung nach Anspruch 7, **dadurch gekennzeichnet, dass** die Verschlussmittel (22, 23) mit Nocken (24) ansteuerbar sind.

10. Abgaseinrichtung nach Anspruch 7, **dadurch gekennzeichnet, dass** die Nocken (24) mit der Kurbelwellendrehzahl rotierbar sind.

11. Abgaseinrichtung nach einem der vorstehenden Ansprüche, **dadurch gekennzeichnet, dass** eine erste Zylindergruppe mit einer ersten Abgasflut (2) verbindbar ist und eine zweite Zylindergruppe mit einer zweiten Abgasflut (2) verbindbar ist, wobei jeder Zylindergruppe zwei Zylinder zugeordnet sind.

12. Abgaseinrichtung nach einem der vorstehenden Ansprüche, **dadurch gekennzeichnet, dass** der Verbrennungsmotor einen Zylinderkopf mit einem integrierten Abgaskrümmer aufweist, wobei der Abgaskrümmer die Abgasfluten (2, 3) bildet und die Blendenanordnung (6) stromabwärts des Abgaskrümmers angeordnet ist.

13. Verfahren zur Steuerung und/oder Regelung einer Abgaseinrichtung zur Trennung von Abgasfluten (2, 3) eines Verbrennungsmotors (4) mit mindestens zwei Zylindergruppen, nach einem der Ansprüche 1 oder 7 wobei jeder Zylindergruppe eine Abgasflut (2, 3) zugeordnet ist, wobei mittels einer Blendenanordnung (6) die Abgasfluten (2, 3) wechselweise mit mindestens einem ausgangsseitigen Abgasstrang (7, 8, 9) verbunden werden, **dadurch gekennzeichnet, dass** in einer Zündfolge benachbarte Zylinder unterschiedlichen Zylindergruppen zugeordnet sind, wobei die Blendenanordnung (6) in Abhängigkeit von Auslassventilsteuerzeiten der Zylindergruppen betrieben wird, wobei die abgasausschiebende Zylindergruppe über die Blendenanordnung (6) mit dem ausgangsseitigen Abgasstrom (7, 8) verbunden wird, wobei die nicht abgasausschiebende Zylindergruppe mittels der Blendenanordnung (6) von dem ausgangsseitigen Abgasstrang (7, 8) getrennt werden.

14. Verfahren nach Anspruch 13, **dadurch gekennzeichnet, dass** die Verbindung der Abgasflut (2, 3) mit dem wenigstens einen ausgangsseitigen Abgasstrang (7, 8, 9) einen bestimmten Kurbelwellenwinkel nach dem Öffnen des Auslassventils des abgasauschiebenden Zylinders der zugehörigen Zylindergruppe erfolgt.

## Claims

1. Exhaust-gas device (1) for separating exhaust-gas channels (2, 3) of an internal combustion engine (4) having at least two cylinder groups, wherein each cylinder group is assigned one exhaust-gas channel (2, 3), wherein the exhaust-gas channels (2, 3) are alternately connectable to at least one outlet-side exhaust-gas tract (7, 8, 9) by means of an aperture arrangement (6), wherein cylinders which are adjacent in an ignition sequence are assigned to different cylinder groups, wherein the aperture arrangement (6) is operable in a manner dependent on outlet valve timings of the cylinder groups, wherein the exhaust-gas-discharging cylinder group is connected to the outlet-side exhaust-gas flow (7, 8) by means of the aperture arrangement (6), wherein the non-exhaust-gas-discharging cylinder group is separated from the outlet-side exhaust-gas tract (7, 8) by means of the aperture arrangement (6), wherein the aperture arrangement (6) has a rotating aperture disc (11, 12), **characterized in that** the aperture disc (11, 12) has multiple slots (13, 14; 16; 17) for connecting the exhaust-gas channels (2, 3) to the at least one exhaust-gas tract (7, 8, 9).

2. Exhaust-gas device according to Claim 1, **characterized in that** a turbine (10) of an exhaust-gas turbocharger is arranged downstream of the aperture arrangement (6).

3. Exhaust-gas device according to one of the preceding claims, **characterized in that** the aperture disc (11, 12) is operable at the crankshaft rotational speed or at the camshaft rotational speed.

4. Exhaust-gas device according to one of the preceding claims, **characterized in that**, if the aperture disc rotates at the crankshaft rotational speed, the slots extend over an angle of 180°.

5. Exhaust-gas device according to one of the preceding claims, **characterized in that**, if the aperture disc rotates at the camshaft rotational speed, the slots extend over an angle of 90°.

6. Exhaust-gas device according to one of the preceding claims, **characterized in that** in each case only one of the exhaust-gas channels (2, 3) is connected to one of the exhaust-gas tracts (7, 8).

7. Exhaust-gas device (1) for separating exhaust-gas channels (2, 3) of an internal combustion engine (4) having at least two cylinder groups, wherein each cylinder group is assigned one exhaust-gas channel (2, 3), wherein the exhaust-gas channels (2, 3) are alternately connectable to at least one outlet-side exhaust-gas tract (7, 8, 9) by means of an aperture arrangement (6), wherein cylinders which are adjacent in an ignition sequence are assigned to different cylinder groups, wherein the aperture arrangement (6) is operable in a manner dependent on outlet valve timings of the cylinder groups, wherein the exhaust-gas-discharging cylinder group is connected to the outlet-side exhaust-gas flow (7, 8) by means of the aperture arrangement (6), wherein the non-exhaust-gas-discharging cylinder group is separated from the outlet-side exhaust-gas tract (7, 8) by means of the aperture arrangement (6), **characterized in that** the aperture arrangement (6) has a closure means (22, 23) which is movable in translational fashion.

8. Exhaust-gas device according to Claim 7, **characterized in that** a turbine (10) of an exhaust-gas turbocharger is arranged downstream of the aperture arrangement (6).

9. Exhaust-gas device according to Claim 7, **characterized in that** the closure means (22, 23) are actuable by means of cams (24).

10. Exhaust-gas device according to Claim 7, **characterized in that** the cams (24) are rotatable at the crankshaft rotational speed.

11. Exhaust-gas device according to one of the preceding claims, **characterized in that** a first cylinder group is connectable to a first exhaust-gas channel (2) and a second cylinder group is connectable to a second exhaust-gas channel (2), wherein each cylinder group is assigned two cylinders.

12. Exhaust-gas device according to one of the preceding claims, **characterized in that** the internal combustion engine has a cylinder head with an integrated exhaust manifold, wherein the exhaust manifold forms the exhaust-gas channels (2, 3) and the aperture arrangement (6) is arranged downstream of the exhaust manifold.

13. Method for the open-loop and/or closed-loop control of an exhaust-gas device for separating exhaust-gas channels (2, 3) of an internal combustion engine (4) having at least two cylinder groups, according to either of Claims 1 and 7, wherein each cylinder group is assigned one exhaust-gas channel (2, 3), wherein the exhaust-gas channels (2, 3) are selectively connected to at least one outlet-side exhaust-gas tract (7, 8, 9) by means of an aperture arrangement (6), **characterized in that** cylinders which are adjacent in an ignition sequence are assigned to different cylinder groups, wherein the aperture arrangement (6) is operated in a manner dependent on outlet valve timings of the cylinder groups, wherein the exhaust-gas-discharging cylinder group is connected to the outlet-side exhaust-gas flow (7, 8) by means of the aperture arrangement (6), wherein the non-exhaust-gas-discharging cylinder group is separated from the outlet-side exhaust-gas tract (7, 8) by means of the aperture arrangement (6).

14. Method according to Claim 13, **characterized in that** the connection of the exhaust-gas channel (2, 3) to the at least one outlet-side exhaust-gas tract (7, 8, 9) occurs a certain crankshaft angle after the opening of the outlet valve of the exhaust-gas-discharging cylinder of the associated cylinder group.

## Revendications

1. Dispositif de gaz d'échappement (1) pour la séparation de flux de gaz d'échappement (2, 3) d'un moteur à combustion interne (4) comprenant au moins deux groupes de cylindres, un flux de gaz d'échappement (2, 3) étant associé à chaque groupe de cylindres, les flux de gaz d'échappement (2, 3) pouvant être raccordés en alternance au moyen d'un agencement de diaphragme (6) à au moins une ligne de gaz d'échappement (7, 8, 9) du côté de la sortie, des cylindres adjacents dans une séquence d'allumage étant associés à différents groupes de cylindres, l'agencement de diaphragme (6) pouvant être actionné en fonction de temps de commande de soupapes d'échappement des groupes de cylindres, le groupe de cylindres évacuant le gaz d'échappement étant raccordé par le biais de l'agencement de diaphragme (6) au flux de gaz d'échappement du côté de la sortie (7, 8), le groupe de cylindres n'évacuant pas le gaz d'échappement étant séparé de la ligne de gaz d'échappement du côté de la sortie (7, 8) au moyen de l'agencement de diaphragme (6), l'agencement de diaphragme (6) présentant un disque de diaphragme rotatif (11, 12), **caractérisé en ce que** le disque de diaphragme (11, 12) présente plusieurs fentes (13, 14 ; 16, ; 17) pour relier les flux de gaz d'échappement (2, 3) à l'au moins une ligne de gaz d'échappement (7, 8, 9).

2. Dispositif de gaz d'échappement selon la revendication 1, **caractérisé en ce qu'**en aval de l'agencement de diaphragme (6) est disposée une turbine (10) d'un turbocompresseur à gaz d'échappement.

3. Dispositif de gaz d'échappement selon l'une quelconque des revendications précédentes, **caractérisé en ce que** le disque de diaphragme (11, 12) peut être entraîné à la vitesse de vilebrequin ou à la vitesse de l'arbre à cames.

4. Dispositif de gaz d'échappement selon l'une quelconque des revendications précédentes, **caractérisé en ce que** lorsque le disque de diaphragme tourne à la vitesse de vilebrequin, les fentes s'étendent sur un angle de 180°.

5. Dispositif de gaz d'échappement selon l'une quelconque des revendications précédentes, **caractérisé en ce que** lorsque le disque de diaphragme tourne à la vitesse de l'arbre à cames, les fentes s'étendent sur un angle de 90°.

6. Dispositif de gaz d'échappement selon l'une quelconque des revendications précédentes, **caractérisé en ce qu'**à chaque fois seulement l'un des flux de gaz d'échappement (2, 3) est raccordé à l'une des lignes de gaz d'échappement (7, 8).

7. Dispositif de gaz d'échappement (1) pour la séparation de flux de gaz d'échappement (2, 3) d'un moteur à combustion interne (4) comprenant au moins deux groupes de cylindres, un flux de gaz d'échappement (2, 3) étant associé à chaque groupe de cylindres, les flux de gaz d'échappement (2, 3) pouvant être raccordés en alternance au moyen d'un agencement de diaphragme (6) à au moins une ligne de gaz d'échappement (7, 8, 9) du côté de la sortie, des cylindres adjacents dans une séquence d'allumage étant associés à différents groupes de cylindres, l'agencement de diaphragme (6) pouvant être actionné en fonction de temps de commande de soupapes d'échappement des groupes de cylindres, le groupe de cylindres évacuant le gaz d'échappement étant raccordé par le biais de l'agencement de diaphragme (6) au flux de gaz d'échappement du côté de la sortie (7, 8), le groupe de cylindres n'évacuant pas le gaz d'échappement étant séparé de la ligne de gaz d'échappement du côté de la sortie (7, 8) au moyen de l'agencement de diaphragme (6), **caractérisé en ce que** l'agencement de diaphragme (6) présente un moyen de fermeture (22, 23) déplaçable en translation.

8. Dispositif de gaz d'échappement selon la revendication 7, **caractérisé en ce qu'**une turbine (10) d'un turbocompresseur à gaz d'échappement est disposée en aval de l'agencement de diaphragme (6).

9. Dispositif de gaz d'échappement selon la revendication 7, **caractérisé en ce que** les moyens de fermeture (22, 23) peuvent être commandés avec des cames (24).

10. Dispositif de gaz d'échappement selon la revendication 7, **caractérisé en ce que** les cames (24) peuvent tourner à la vitesse du vilebrequin.

11. Dispositif de gaz d'échappement selon l'une quelconque des revendications précédentes, **caractérisé en ce qu'**un premier groupe de cylindres peut être raccordé à un premier flux de gaz d'échappement (2) et un deuxième groupe de cylindres peut être raccordé à un deuxième flux de gaz d'échappement (2), deux cylindres étant associés à chaque groupe de cylindres.

12. Dispositif de gaz d'échappement selon l'une quelconque des revendications précédentes, **caractérisé en ce que** le moteur à combustion interne présente une culasse avec un collecteur de gaz d'échappement intégré, le collecteur de gaz d'échappement formant les flux de gaz d'échappement (2, 3) et l'agencement de diaphragme (6) étant disposé en aval du collecteur de gaz d'échappement.

13. Procédé pour commander/réguler un dispositif de gaz d'échappement pour la séparation de flux de gaz d'échappement (2, 3) d'un moteur à combustion interne (4) comprenant au moins deux groupes de cylindres selon l'une quelconque des revendications 1 ou 7, dans lequel un flux de gaz d'échappement (2, 3) est associé à chaque groupe de cylindres, les flux de gaz d'échappement (2, 3) étant raccordés en alternance au moyen d'un agencement de diaphragme (6) à au moins une ligne de gaz d'échappement (7, 8, 9) du côté de la sortie, **caractérisé en ce que** des cylindres adjacents dans une séquence d'allumage sont associés à différents groupes de cylindres, l'agencement de diaphragme (6) étant actionné en fonction de temps de commande de soupapes d'échappement des groupes de cylindres, le groupe de cylindres évacuant le gaz d'échappement étant raccordé par le biais de l'agencement de diaphragme (6) au flux de gaz d'échappement du côté de la sortie (7, 8), le groupe de cylindres n'évacuant pas le gaz d'échappement étant séparé de la ligne de gaz d'échappement du côté de la sortie (7, 8) au moyen de l'agencement de diaphragme (6).

14. Procédé selon la revendication 13, **caractérisé en ce que** le raccordement du flux de gaz d'échappement (2, 3) à l'au moins une ligne de gaz d'échappement du côté de la sortie (7, 8, 9) s'effectue à un angle de vilebrequin déterminé après l'ouverture de la soupape d'échappement du cylindre évacuant les gaz d'échappement du groupe de cylindres associé.
